# EUROPÄISCHE PATENTSCHRIFT

(11) **EP 0 651 975 B1**
(45) Veröffentlichungstag und Bekanntmachung des Hinweises auf die Patenterteilung: **09.09.1998**
(21) Anmeldenummer: 94111596.6
(22) Anmeldetag: 26.07.1994
(51) Int. Cl.: A61C 8/00

(54) **Zahntotalersatzimplantat**
Complete tooth implant assembly
Système d'implant remplaçant totalement une dent

(30) Priorität: 09.11.1993 DE 4338198; 18.01.1994 DE 4401248
(43) Veröffentlichungstag der Anmeldung: 10.05.1995
(60) Teilanmeldung: 97122161.9
(73) Patentinhaber: ESKA Implants GmbH & Co., 23556 Lübeck (DE)
(72) Erfinder: Grundei, Hans Dr., D-23558 Lübeck (DE); Sprang, Jürgen Dr., D-22607 Hamburg (DE)
(74) Vertreter: Fuchs Mehler Weiss & Fritzsche

(56) Entgegenhaltungen:
- EP-A- 0 000 549
- DE-A- 4 127 839
- US-A- 4 850 870

## Beschreibung

Die Erfindung betrifft ein Zahntotalersatzimplantat, welches aus drei Teilen besteht, nämlich dem Zahnwurzelimplantat, welches in der Alveole implantiert wird, einem Adapter zur lösbaren Verbindung einer Suprastruktur mit dem Zahnwurzelimplantat und schließlich der Suprastruktur selbst, die beispielsweise als Zahn ausgebildet sein kann.

Ein solches Zahntotalersatzimplantat ist beispielsweise bekannt geworden aus den Druckschriften DE-90 11 663 U1 sowie aus der DE-92 02 396 U1.

Das darin jeweils beschriebene Zahnwurzelimplantat wird - wie allgemein üblich - in eine in der Alveole nach Entfernung des natürlichen Zahnes eingebrachte Bohrung gesetzt, wo es auf verschiedene Weise fixiert werden kann. Ein Zwischenstück oder ein Adapter wird daraufhin implantatseitig in einen konischen Paßsitz mit dem Wurzelimplantat gebracht. Hierzu verfügt das Wurzelimplantat über eine konische Paßhülse und der Adapter über einen entsprechenden unteren Steckkonus.

Gemäß der letztgenannten Druckschrift besteht der Adapter aus einem Doppelkonus, von dem also vom implantatseitigen Konus ein suprastrukturseitiger Steckkonus abragt, welcher in einen Paßsitz mit einer konischen Paßhülse in der Suprastruktur bringbar ist.

Dem Implantat gemäß der als gattungsbildend angesehenen DE-92 02 396 U1 haftet folgendes Problem an:

Während das Zahnwurzelimplantat in der Alveole, also im Knochen verankert ist, durchdringt der Suprastrukturadapter die Gingiva ( das Zahnfleisch). Bei der Implantation wird die Gingiva mittels eines geeigneten Werkzeuges durchstanzt und an der Knochengrenze ein Schnitt durchgeführt, woraufhin dann der Suprastrukturadapter in das Wurzelimplantat gesetzt wird und danach die ihn umgebende Gingiva vernäht wird. An der Austrittsstelle des Adapters aus der Gingiva entsteht der kritische Ort, an dem Bakterien infiltrieren können und sich entlang des Adapters einen Weg durch die Gingiva bahnen können bis hinunter zum Wurzelimplantat. Auf diese Weise können gefährliche Entzündungsherde entstehen.

Vor diesem Hintergrund ist es nun die Aufgabe der vorliegenden Erfindung, das gattungsgemäße Zahntotalersatzimplantat so weiterzubilden, daß der Infiltration von Bakterien an der Schnittstelle des Suprastrukturadapters wirksam entgegengewirkt wird.

Gelöst wird diese Aufgabe durch die Merkmale gemäß dem Anspruch 1.

Demnach ist vorgesehen, daß die beiden Steckkonen des Suprastrukturadapters untereinander durch ein Übergangsstäck verbunden sind, welches sich vom Ansatz des okklusalen Steckkonus hin zum Ansatz des apikalen Steckkonus erweitert.

Hierdurch wird erreicht, daß der Anpreßdruck der Gingiva auf den Übergangsbereich von der Austrittsstelle des Suprastrukturadapters aus der Gingiva hinunter durch die Gingiva hindurch bishin zur Alveole stark zunimmt, damit eine regelrechte mechanische Abdichtung gegenüber der Infiltration von Bakterien stattfindet.

Was durch diese Infiltrationshemmung in erster Linie erreicht wird, ist, daß ein Vordringen von Bakterien bishin in die Alveole verhindert wird, was verheerende Folgen für die Verankerung des Zahnwurzelimplantates hätte. Von den Schmerzen für die Patienten ganz abgesehen, würde dies nämlich eine Lockerung des Wurzelimplantates nach sich ziehen können und damit den Erfolg der Therapie insgesamt in Frage stellen. Selbstverständlich aber werden auch die inneren Gingivaschichten vor einer Entzündung bewahrt, was die Verträglichkeit des Implantat als Ganzes erhöht.

Operativ wird so vorgegangen, daß mittels eines geeigneten Instrumentes eine im wesentlichen zylindrische Durchstanzung durch die Gingiva erzeugt wird. Auf dem alveolenseitigen Ende der Durchstanzung wird ein Schnitt ausgeführt, der den Einsatz des Suprastrukturadapters, nachdem das Zahnwurzelimplantat in die Alveole eingebracht worden ist, mit dem sich unten aufweitenden Übergangsstück von der Seite her gestattet. Der Suprastrukturadapter wird ausgerichtet, der Paßsitz mit dem Wurzelimplantat hergestellt und die Gingiva im Bereich des Suprastrukturadapters unter Zug vernäht, so daß von Beginn an ein Anpreßdruck von der Gingiva auf das Übergangsstück des Suprastrukturadapters ausgeübt wird, und zwar alveolenseitig ein höherer Druck als suprastrukturseitig aufgrund der erfindungsgemäßen Ausbildung des Übergangsstückes.

Vorzugsweise ist das Übergangsstück so ausgebildet, daß es sich stetig erweitert. Hierdurch wird erreicht, daß der Anlagedruck der Gingiva an das Übergangsstück des Suprastrukturadapters in dessen Verlauf durch die Gingiva hindurch zum Zahnwurzelimplantat hin ebenfalls stetig steigt.

Gemäß weiterer vorteilhafter Ausbildungen sind noch Verstellmöglichkeiten der Suprastruktur gegenüber dem Suprastrukturadapter und des Suprastrukturadapter gegenüber dem Zahnwurzelimplantat vorgesehen, wie sich aus weiteren Unteransprüchen ergibt.

Die Erfindung wird anhand eines Ausführungsbeispiels gemäß der Zeichnungsfiguren näher erläutert. Hierbei zeigt:
- Fig. 1: eine Schnittansicht des Zahnwurzelimplantates, wie es im Rahmen der Erfindung zum Einsatz kommt,
- Fig. 2: eine Aufsicht auf das Zahnwurzelimplantat gemäß Fig. 1,
- Fig. 3: die Ansicht des Suprastrukturadapters, schematisch in bezug auf das Zahnfleisch und die Alveole dargestellt,
- Fig. 4: eine Schnittansicht der Suprastruktur

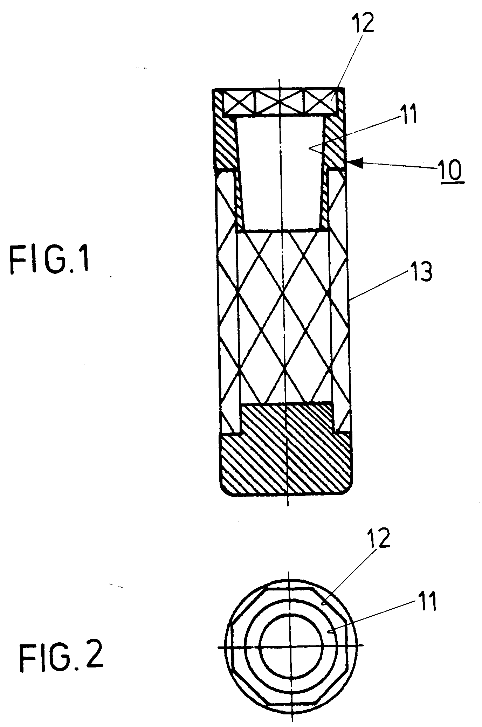

Fig. 1 zeigt eine mögliche Ausführungsform des Zahnwurzelimplantates 10, wie es im Rahmen des erfindungsgemäßen Zahntotalersatzimplantates zur Anwendung kommen kann. Das ausgebildete Wurzelimplantat 10 weist einen Netz-Hohlzylinder 13 auf, der in die Alveole eingesetzt wird. Die Ausbildung des Netz-Hohlzylinders ist nicht Gegenstand der vorliegenden Erfindung. Erfindungswesentlich hingegen ist die Ausbildung des Kopfes des Zahnwurzelimplantates 10, bei dem nämlich eine konische Paßhülse 11 eingearbeitet ist. Darüber hinaus ist in deren oberen Bereich ein Innenvielkant 12, hier ein Innenachtkant ausgebildet, der - wie weiter unten ausgeführt - zusammen mit einem weiteren Teil des Suprastrukturadapters 20 rotationsarretierend wirkt. Anschaulich wird die Konstruktion des Wurzelimplantates 10 insbesondere aus der Abbildung gemäß Fig. 2, welche eine Aufsicht auf den Kopf des Wurzelimplantates 10 zeigt. Deutlich erkennbar hierbei ist nochmals der Innenachtkant 12, welcher der Lageeinstellung und Arretierung der Suprastruktur 20 dient.

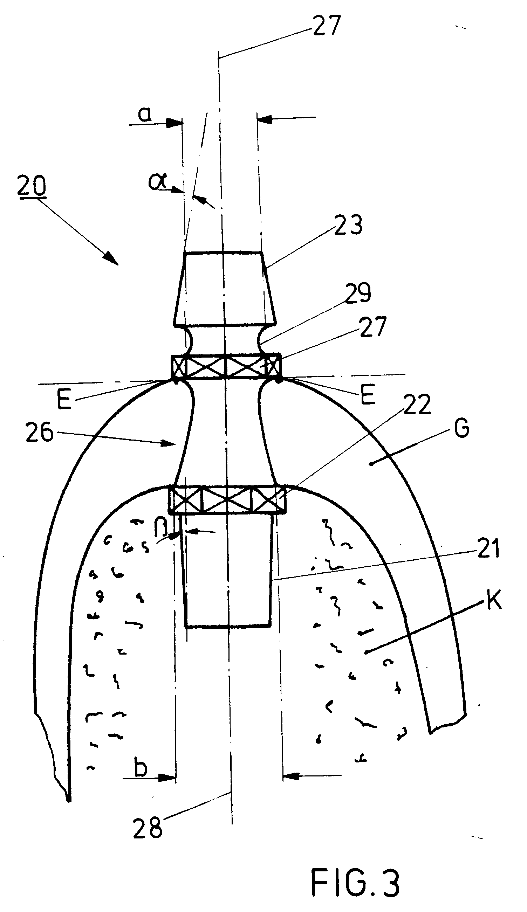

Fig. 3 zeigt nun den Suprastrukturadapter 20. Seine wesentlichsten Teile sind der suprastrukturseitige Steckkonus 23 und der implantatseitige Steckkonus 21, die beide untereinander durch das Übergangsstück 26 verbunden sind. Vorliegend ist eine Ausführungsform abgebildet, bei der der Konuswinkel α zur Hauptachse 27 des Steckkonus 23 wesentlich größer ist als der Konuswinkel β des Steckkonus 21 zu dessen Hauptachse 28. Die Achsen 27 und 28 fallen hier im übrigen aufeinander. Der Winkel α bewegt sich im Bereich zwischen 7 und 10°. Der Winkel β im Bereich zwischen 1,5° und 4°

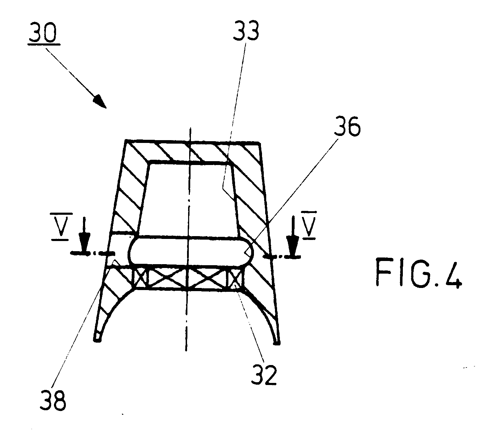

Vorliegend sind an den Basen der Steckkonen 21 und 23 Außenachtkante 22 bzw. 27 ausgeformt. Der Außenachtkant 22 paßt in den Innenachtkant 12 des Zahnwurzelimplantates 10. Entsprechend paßt der Außenachtkant 27 in einen Innenachtkant 32 (Fig. 4) in der Suprastruktur 30. Diese Anordnung gestattet eine ausreichende Anzahl von Verstellmöglichkeiten der Suprastruktur gegenüber dem Zahnwurzelimplantat.

Erfindungsgemäß ist das Übergangsstück 26 im Bereich des Ansatzes des opikalen (unteren) Steckkonus 21 deutlich breiter als im Bereich des Ansatzes des okklusalen (oberen) Steckkonus 23. Dies wird durch die Bemaßung a und b in der Fig. 3 deutlich, wobei a < b gilt.

Vorliegend ist schematisch die Lage der Gingiva G an dem Suprastrukturadapter 20 schematisch dargestellt, ebenso wie der Übergangsbereich vom Knochen K zur Gingiva. Deutlich wird, daß der Innenvielkant 22 im Bereich der Knochengrenze liegt. Im unteren Bereich würde sich das Zahnwurzelimplantat befinden (nicht dargestellt).

An den Punkten E, d.h. also an der Grenze zwischen Gingiva und dem Übergangsbereich 26 des Suprastrukturadapters 20, besteht die Gefahr der Infiltration von Bakterien, welche sich ohne die erfindungsgemäße Maßnahme (b > a) einen Weg hin zur Knochengrenze bahnen könnten. So aber erhöht sich der Anlagedruck der Gingiva G gegen das Übergangsstück 26 mit der räumlichen Tiefe in der Gingiva, da nämlich das Übergangsstück im Bereich der Knochengrenze die Gingiva G weiter nach außen verdrängt als dies im oberen Bereich der Fall ist. Erreicht wird dies bei dem operativen Eingriff dadurch, daß die Gingiva nach Einsatz des Suprastrukturadapters (nach zuvor erfolgter Implantation des Zahnwurzelimplantates) vernäht wird unter hohen Zugkräften.

Erkennbar ist in Fig. 3 im übrigen die umlaufende Ringnut, die im Basisbereich des Steckkonus 23 eingelassen ist. Deren Funktion ergibt sich im einzelnen im Zusammenhang mit der Suprastruktur.

## Patentansprüche

1. Zahntotalersatzimplantat, bestehend aus einem Zahnwurzelimplantat (10), einem Suprastrukturadapter (20) und einer Suprastruktur (30), wobei die Suprastruktur (30) mit dem Zahnwurzelimplantat (10) lösbar verbindbar ist mittels des Adapters (20) und jeweils eine konische Hülse (11; 33) im Kopf des Zahnwurzelimplantates (10) sowie unten in der Suprastruktur (30) vorgesehen ist, bei dem der Adapter (20) im wesentlichen aus zwei voneinander wegragenden Steckkonen (21, 23) besteht, welche in einen lösbaren Sitz mit den konischen Hülsen (11, 33) bringbar sind,
dadurch gekennzeichnet daß,
beide Steckkonen (21, 23) untereinander durch ein Übergangsstück (26) verbunden sind, und
daß sich das Übergangsstück (26) vom Ansatz des okklusalen Steckkonus (23) hin zum Ansatz des apikalen Steckkonus (21) erweitert.

2. Zahntotalersatzimplantat nach Anspruch 1, dadurch gekennzeichnet, daß sich das Übergangsstück (26) stetig erweitert.

3. Zahntotalersatzimplantat nach Anspruch 1 oder 2, bei dem am oberen Bereich der konischen Paßhülse (11) im Zahnwurzelimplantat (10) ein Innenvielkant (12) ausgebildet ist, in welchen ein an der Basis des zweiten Steckkonus (21) des Adapters (20) zur Herstellung der Verbindung mit dem Zahnwurzelimplantat (10) angeformter Bund in Form eines Außenvielkantes (22) setzbar ist unter gleichzeitiger Herstellung der konischen Klemmverbindung zwischen Adapter (20) und Zahnwurzelimplantat (10).

4. Zahntotalersatzimplantat nach einem der Ansprüche 1 bis 3, dadurch gekennzeichnet, daß auch im unteren Bereich der konischen Paßhülse (33) ein Innenvielkant (32) ausgebildet ist, in welchen ein an der Basis des ersten Steckkonus (23) des Adapters (20) zur Herstellung der Verbindung mit der Suprastruktur (30) angeformter Bund in Form eines Außenvielkantes (27) setzbar ist unter gleichzeitiger Herstellung des lösbaren Sitzes zwischen Adapter (20) und Suprastruktur (30).

5. Zahntotalersatzimplantat nach Anspruch 3 oder 4, bei dem der Innenvielkant (12, 32) als Innenachtkant und der Außenvielkant (22, 27) als Außenachtkant ausgebildet ist.

## Claims

1. Total tooth replacement implant comprising a tooth root implant (10), a suprastructure adapter (20) and a suprastructure (30), wherein the suprastructure (30) can be releasably connected to the tooth root implant (10) by means of the adapter (20) and in each case a conical socket (11; 33) is provided in the head of the tooth root implant (10) and at the bottom of the suprastructure (30), in which the adapter (20) comprises essentially two insert cones (21, 23) projecting away from one another and which can be introduced into a releasable seat using the conical sockets (11, 33), characterised in that both insert cones (21, 23) are connected to one another by a transition piece (26), and in that the transition piece (26) expands from the shoulder of the occlusal insert cone (23) towards the shoulder of the apical insert cone (21).

2. Total tooth replacement implant according to claim 1, characterised in that the transition piece (26) expands continuously.

3. Total tooth replacement implant according to claim 1 or 2, in which an inner polyhedron (12), into which a collar in the form of an external polyhedron (22) moulded onto the base of the second insert cone (21) of the adapter (20) to produce the connection with the tooth root implant (10) can be placed with simultaneous production of the conical clamping connection between adapter (20) and tooth root implant (10), is designed on the upper region of the conical fitted socket (11) in the tooth root implant (10).

4. Total tooth replacement implant according to one of claims 1 to 3, characterised in that an inner polyhedron (32), into which a collar in the form of an external polyhedron (27) moulded onto the base of the first insert cone (23) of the adapter (20) to produce the connection with the suprastructure (30) can be placed with simultaneous production of the releasable seat between adapter (20) and suprastructure (30), is also designed in the lower region of the conical fitted socket (33).

5. Total tooth replacement implant according to claim 3 or 4, in which the inner polyhedron (12, 32) is designed as an inner octahedron and the external polyhedron (22, 27) as an external octahedron.

## Revendications

1. Implant dentaire total constitué d'un implant (10) d'une racine dentaire, d'un adaptateur (20) de la superstructure, et d'une superstructure (30), ladite superstructure (30) pouvant être reliée de manière amovible à l'implant (10) de la racine, au moyen de l'adaptateur (20), avec présence d'une douille conique (11, 33) respectivement dans la tête de l'implant (10) de la racine dentaire, et sous la superstructure (30), ledit adaptateur (20) étant constituée essentiellement de deux cônes enfichables (21, 23) orientés dans des directions divergentes, et qui peuvent être amenés en prise ajustée et amovible avec les douilles coniques (11, 33),
caractérisé en ce que
les deux cônes enfichables (21, 23) sont reliés mutuellement par une pièce intermédiaire (26), et
que cette pièce intermédiaire (26) s'élargit entre l'embout du cône enfichable occlusal et l'embase du cône enfichable (21) apical.

2. Implant dentaire total selon la revendication 1, caractérisé en ce que la pièce intermédiaire (26) s'élargit de manière continue.

3. Implant dentaire total selon la revendication 1 ou 2, dans lequel, sur la région supérieure de la douille conique (11), à l'intérieur de l'implant (10) de la racine dentaire, est conformé un polygone intérieur (12) dans lequel peut être inséré un collier ayant la forme d'un polygone extérieur (22) ajusté à l'embase du deuxième cône (21) de l'adaptateur (20), afin d'établir la liaison avec l'implant (10) de la racine dentaire, avec établissement simultané de la liaison par ajustage conique serré entre l'adaptateur (20) et l'implant (10) de la racine dentaire.

4. Implant dentaire total selon l'une des revendications 1 à 3, caractérisé en ce que dans la zone inférieure de la douille conique (33) également, est conformé un polygone intérieur (32) dans lequel peut être inséré un collier ayant la forme d'un polygone extérieur (27) ajusté à la base du premier cône (23) de l'adaptateur (20), afin de réaliser la liaison avec la superstructure (30), avec établissement simultané de la prise ajustée amovible entre l'adaptateur (20) et la superstructure (30).

5. Implant dentaire total selon la revendication 3 ou 4, dans lequel le polygone intérieur (12, 32) est réalisé sous la forme d'un octogone intérieur et le polygone extérieur (22, 27) sous la forme d'un octogone extérieur.
